# EUROPEAN PATENT APPLICATION

(11) **EP 3 435 277 A1**
(43) Date of publication of application: **30.01.2019**
(21) Application number: 17199120.1
(22) Date of filing: 30.10.2017
(51) Int. Cl.: G06K 9/00, A45D 44/00

(54) **BODY INFORMATION ANALYSIS APPARATUS CAPABLE OF INDICATING BLUSH-AREAS**

(30) Priority: 25.07.2017 CN 201710611938
(71) Applicant: CAL-COMP BIG DATA INC, Shenkeng, New Taipei City 222 (TW)
(72) Inventor: Shen, Shyh-Yong, Shenkeng Dist., New Taipei City 222 (TW); Chi, Min-Chang, Shenkeng Dist., New Taipei City 222 (TW); Lin, Hui-Teng, Shenkeng Dist., New Taipei City 222 (TW)
(74) Representative: Patentanwälte Bals & Vogel

(57) **Abstract**

A body information analysis apparatus (1) capable of indicating blush areas (A1-A4) is disclosed and includes: an image capturing module (12) for capturing an external image; a processor (10) electrically connected to the image capturing module (12), stored multiple face types and multiple indicating processes respectively corresponding to each of the face types, the processor (10) determines a face type of a face when the face is recognized in the external image, and executes one of the multiple indicating processes corresponding to the determined face type, so as to indicate blush areas (A1-A4) on the face; and, a display module (111) electrically connected to the processor (10), for displaying the face in company with the indicated blush areas (A1-A4).

## Description

### 1.Technical Field

The techinical field relates to an analysis apparatus, and specifically relates to a body information analysis apparatus capable of indicating blush-areas.

### 2.Description of Related Art

Applying cosmetics is an important one of multiple routine jobs for womem.

Generally, a user usually sits in front of the mirror for applying cosmetics, or uses apparatuses having the camera and the monitor (such as smart phones, tablets, etc.) to substitute the traditional mirror for applying cosmetics.

However, the user can only check and confirm whether the makeup is done evenly or the color is appropriated or not by his/her bare eyes, that's why some users with less experiences may face the problem in slow makeup speed or terrible makeup quality.

According to the problem, users in this technical field seriously need an auxiliary apparatus, which may assist the users to apply cosmetics quickly and also to optimize the quality of the makeup.

### SUMMARY OF THE INVENTION

The invention is directed to a body information analysis apparatus capable of indicating blush-areas, which may automatically indicate blush-areas on face images of users according to the face type of the users, so as to lead the users to apply cosmetics for the blushes more accurate upon exact positions.

In one of the exemplary embodiments of the present invention, the body information analysis apparatus capable of indicating blush areas may comprise:
an image capturing module, for capturing an external image;
a processor electrically connected with the image capturing module, recorded multiple face types and multiple indicating processes respectively corresponding to each of the face types, the processor recognizing the external image, and performing positioning actions to each facial feature of a face and determining a face type of the face once the face is recognized from the external image,
wherein the processor executes a corresponding one of the indicating processes according to the determined face type of the recognized face for indicating blush areas on the face once the face is determined as one of the multiple recorded face types; and
a display module (111), electrically connected with the processor, displaying the face in company with the indicated blush areas (A1-A4), wherein the displayed blush areas are overlapped with the displayed face.

As mentioned, wherein the processor comprises:
a face recognizing module (101), recognizing the external image for determining whether the face is present in the external image;
a positioning module (102), performing positioning actions to each facial feature of the face for determining the face type of the face; and
an indicating module (103), executing the corresponding one of the indicating processes according to the determined face type for indicating the blush areas (A1-A4) on the face.

As mentioned, wherein the indicating module performs a first indicating process for indicating the blush areas on the face once the face is determined as an oval face.

As mentioned, wherein the indicating module performs the first indicating process for executing following actions once the face is determined as the oval face:
generating a first horizontal line upon a lower edge of eyes of the face;
obtaining a first intersection point of the first horizontal line and a contour of the face;
obtaining a first auxiliary line through connecting the first intersection point to a corner of a mouth of the face;
generating a second horizontal line upon the corner of the mouth;
obtaining a second intersection point of the second horizontal line and the contour of the face;
obtaining a second auxiliary line through connecting the second intersection point to a midpoint of a lower eyelid of the face;
generating a third horizontal line for being a third auxiliary line upon a lowest point of a nose of the face; and
constituting the blush areas based on the first auxiliary line, the second auxiliary line, and the third auxiliary line.

As mentioned, wherein the indicating module performs a second indicating process for indicating the blush areas on the face once the face is determined as a round face or a square face.

As mentioned, wherein the indicating module performs the second indicating process for executing following actions once the face is determined as the round face or the square face:
generating a first horizontal line upon a lowest point of a nose of the face;
generating a second horizontal line upon a lower edge of eyes of the face;
obtaining a first intersection point of the second horizontal line and a contour of the face;
obtaining a fourth auxiliary line through connecting the first intersection point to a highest point of alae of the nose of the face;
obtaining a fifth auxiliary line through horizontally moving the fourth auxiliary line down to a position that intersects with the first horizontal line;
generating a vertical line upon a corner of a mouth of the face for being a sixth auxiliary line; and
constituting the blush areas based on the fourth auxiliary line, the fifth auxiliary line, and the sixth auxiliary line.

As mentioned, wherein the indicating module performs a third indicating process for indicating the blush areas on the face once the face is determined as a long face.

As mentioned, wherein the indicating module performs the third indicating process for executing following actions once the face is determined as the long face:
generating a first horizontal line upon a lower edge of eyes of the face for being a seventh auxiliary line;
generating a second horizontal line upon a highest point of alae of a nose (84) of the face for being an eighth auxiliary line;
generating a vertical line upon an outer point of alae of the nose of the face for being a ninth auxiliary line; and
constituting the blush areas based on the seventh auxiliary line, the eighth auxiliary line, and the ninth auxiliary line.

As mentioned, wherein the indicating module performs a fourth indicating process for indicating the blush areas on the face once the face is determined as an inverted triangular face or a diamond face.

As mentioned, wherein the indicating module performs the fourth indicating process for executing following actions once the face is determined as the inverted triangular face or the diamond face:
generating a first horizontal line upon a lower edge of eyes of the face;
generating a first intersection point of the first horizontal line and a contour of the face;
obtaining a tenth auxiliary line through connecting the first intersection point to a highest point of alae of a nose of the face;
generating a vertical line upon a peak point of eyebrows of the face for being an eleventh auxiliary line;
generating a second horizontal line upon a lowest point of the nose of the face;
obtaining a second intersection point of the second horizontal line and the contour of the face;
obtaining a twelfth auxiliary line through connecting the second intersection point to the highest point of alae of the nose; and
constituting the blush areas based on the tenth auxiliary line, the eleventh auxiliary line, and the twelfth auxiliary line.

As mentioned, wherein the positioning module performs the positioning actions to each facial feature of the face through a Dlib Face Landmark system.

In comparison with related art, each embodiment disclosed in the present invention may provide a face image of the user when he or she is applying cosmetics through the body information analysis apparatus, and the user may obtain recommended blush-areas upon the face image, so as to apply blushes upon exact positions on his or her own face.

### BRIEF DESCRIPTION OF THE DRAWINGS

Fig. 1 is a schematic diagram of a system according to a first embodiment of the present invention.
Fig. 2 is a schematic diagram of an analysis apparatus according to a first embodiment of the present invention.
Fig. 3 is a schematic diagram of the analysis apparatus according to a second embodiment of the present invention.
Fig. 4 is a block diagram of the analysis apparatus according to a third embodiment of the present invention.
Fig. 5 is a schematic diagram of a processor according to a first embodiment of the present invention.
Fig. 6A is a first indicating flowchart according to a first embodiment of the present invention.
Fig. 6B is a second indicating flowchart according to the first embodiment of the present invention.
Fig. 7 is a schematic diagram for positioning a face.
Fig. 8A is a flowchart for indicating the blush areas according to a second embodiment of the present invention.
Fig. 8B is a schematic diagram showing the blush areas according to the second embodiment of the present invention.
Fig. 9A is a flowchart for indicating the blush areas according to a third embodiment of the present invention.
Fig. 9B is a schematic diagram showing the blush areas according to the third embodiment of the present invention.
Fig. 10A is a flowchart for indicating the blush areas according to a fourth embodiment of the present invention.
Fig. 10B is a schematic diagram showing the blush areas according to the fourth embodiment of the present invention.
Fig. 11A is a flowchart for indicating the blush areas according to a fifth embodiment of the present invention.
Fig. 11B is a schematic diagram showing the blush areas according to the fifth embodiment of the present invention.
Fig. 12 is a schematic diagram of the analysis apparatus according to a fourth embodiment of the present invention.

### DETAILED DESCRIPTION OF THE INVENTION

In cooperation with the attached drawings, the technical contents and detailed description of the present invention are described thereinafter according to multiple embodiments, being not used to limit its executing scope. Any equivalent variation and modification made according to appended claims is all covered by the claims claimed by the present invention.

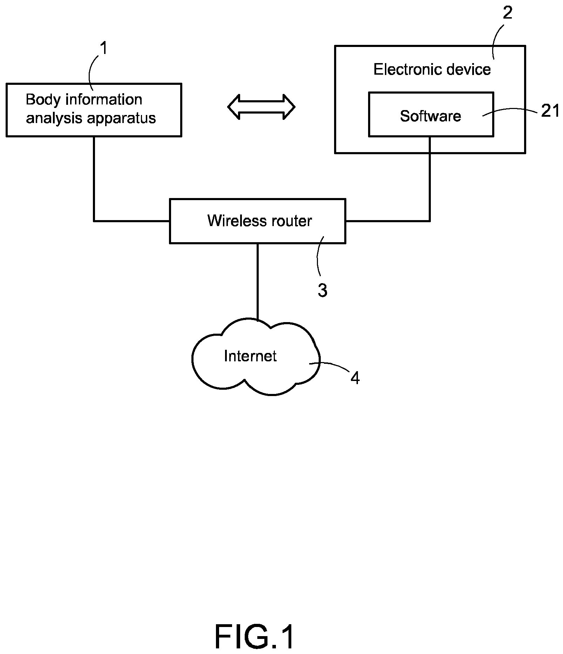

Fig. 1 is a schematic diagram of a system according to a first embodiment of the present invention. The present invention discloses a body information analysis apparatus (referred to as the analysis apparatus 1 hereinafter). The analysis apparatus 1 is used to perform a blush areas indicating method (referred to as the indicating method hereinafter), which assists a user in making up blushes (also called "rouge") on his or her own face more quickly and accurately.

In one embodiment, the user may perform setting on the analysis apparatus 1 through operating an electronic device 2. In particular, if the analysis apparatus 1 and the electronic device 2 are connecting to same wireless router 3, they can establish a wireless connection through the wireless router 3. Besides, the analysis apparatus 1 and the electronic device 2 may pair or connect directly other through other wireless communication protocols (e.g., Bluetooth pairing, Zigbee connecting, RF connection, etc.), so as to transmit data, commands and signals with each other.

As shown in Fig. 1, the electronic device 2 is installed with a software 21. In particular, the software 21 may interconnect with the analysis apparatus 1 (for example, the software 21 may be an application program created and provided by the manufacturer of the analysis apparatus 1). In the present invention, a user may operate the software 21 executed by the electronic device 2 for completing multiple setting actions on the analysis apparatus 1 (such as registering face information, setting default values, etc.).

In one embodiment, the analysis apparatus 1 may connect to the wireless router 3 arranged in same area, and connects to the Internet 4 through the wireless router 3. Therefore, the analysis apparatus 1 may perform firmware updating, data uploading, data downloading, etc. through the Internet 4. Besides, the analysis apparatus 1 may collect user's body information and transmit the body information to a remote computer (not shown) through the Internet 4. Therefore, the user may check the body information from a remote end, and an offsite backup purpose may also be accomplished.

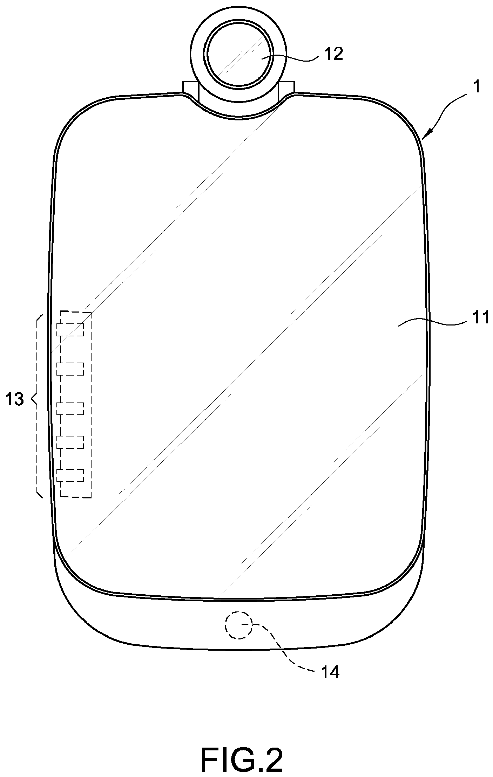

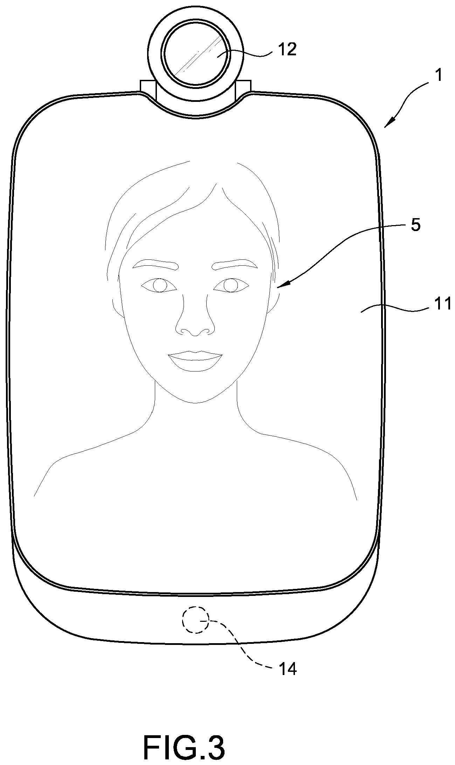

Refer to Fig. 2 and Fig. 3, wherein Fig. 2 is a schematic diagram of an analysis apparatus according to a first embodiment of the present invention, and Fig. 3 is a schematic diagram of the analysis apparatus according to a second embodiment of the present invention. The analysis apparatus 1 in the present invention is basically arranged in the bedroom or the restroom of a user 5 and is used to inspect and analyze user's body information (e.g., the skin situation of the face, the neck, or the hands, etc.), so as to assist the user 5 to apply cosmetics.

The analysis apparatus 1 includes a mirror screen 11. The analysis apparatus 1 displays a graphical user interface (GUI) through the mirror screen 11 for interacting with the user 5 while it is turned on. When the analysis apparatus 1 is turned off, the mirror screen 11 can also be deemed and used as a regular mirror for reflecting the face look of the user 5. One of the main objectives of the present invention is to assist the user 5 in applying cosmetics through the analysis apparatus 1. For doing so, the mirror screen 11 may simultaneously reflect the face look of the user 5 and display the GUI. Therefore, the analysis apparatus 1 may analyze the make-up of the user 5 while the user 5 is applying cosmetics for providing assistances to the user 5 (detailed described in the following).

In one embodiment, the mirror screen 11 may be a touch screen, and the user 5 may perform data input on the analysis apparatus 1 through the mirror screen 11.

The analysis apparatus 1 further includes an image capturing module 12, which is arranged on the analysis apparatus 1 and is adjustable for its setting angle. In one embodiment, the image capturing module 12 may capture high-resolution images for the user 5 (such as face images, neck images, hands images, etc.). Therefore, the analysis apparatus 1 may analyze body information and make-up progress of the user 5 through the captured images. In another embodiment, the image capturing module 12 may capture external messages (such as barcodes, QR codes, etc.), and the analysis apparatus 1 may obtain necessary data according to the content of the captured external messages.

The analysis apparatus 1 further includes multiple buttons 13. In one embodiment, the multiple buttons 13 may be physical buttons or touch keys, not limited thereto. The user 5 may operate the GUI (for example, controls the GUI to go back to a home page, to perform a pageup function, to perform a pagedown function, etc.), or leads the analysis apparatus 1 to quickly trigger corresponding functions (for example, turns on the mirror screen 11, turns off the mirror screen 11, turns on the image capturing module 12, etc.), by way of pressing the buttons 13.

The analysis apparatus 1 further includes one or more sensors 14 (such as temperature sensors, humility sensors, etc.). The sensors 14 are used to detect the environment values around the position where the analysis apparatus 1 is arranged. Therefore, the accuracy of the body information of the user 5 detected and analyzed by the analysis apparatus 1 may be enhanced in accordance with the sensor data. For an instance, if the sensors 14 comprise a pyroelectric infrared radial (PIR) sensor, it can detect whether the user 5 is entering the field of usage of the analysis apparatus 1 in any time. Therefore, the analysis apparatus 1 may leave the standby mode correspondingly for activating the image capturing module 12 for capturing the face image of the user 5 and performing the following analysis processes.

In another embodiment, the above sensors 14 may include a motion sensor. The analysis apparatus 1 may detect user's moving gesture (such as waving left, waving right, waving up, waving down, pushing forward, pulling backward, etc.) through the motion sensor. Therefore, the user 5 may perform data input on the analysis apparatus 1 through the moving gestures without physically touching the aforementioned mirror screen 11 or the buttons 13, so as to prevent the mirror screen 11 and the buttons 13 from retaining fingerprints.

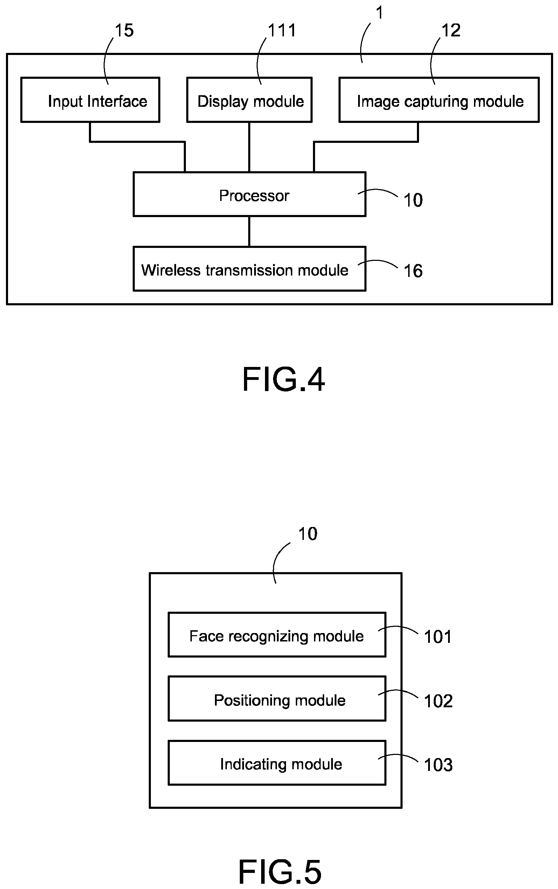

Fig. 4 is a block diagram of the analysis apparatus according to a third embodiment of the present invention. As shown in Fig. 4, the analysis apparatus 1 mainly includes a processor 10, a display module 111, the image capturing module 12, an input interface 15, and a wireless transmission module 16, wherein the display module 111, the image capturing module 12, the input interface 15, and the wireless transmission module 16 are electrically connected with the processor 10.

In one embodiment, the image capturing module 12 may be a camera. The image capturing module 12 is used to capture external images and messages and provides the captured images and the captured messages to the analysis apparatus 1. The analysis apparatus 1 may perform recognitions on the user 5 through the captured images (for example, a face recognition, a neck recognition, a hand recognition, etc.) so as to analyze each facial feature of the user 5 (such as the face, the neck, the hand, etc). Also, the analysis apparatus 1 may also perform relative setting actions through the content of the captured messages.

The display module 111 is used to display the aforementioned GUI. In one embodiment, the display module 111 is arranged inside the mirror screen 11. When the display module 111 is turned on, the light emitted from the display module 111 may penetrate through the mirror screen 11 and the GUI may be displayed right on the mirror screen 11. When the display module 111 is turned off, the user may regard and use the mirror screen 11 as a regular mirror. In one embodiment, the analysis apparatus 1 may adjust the light strength or the display area of the display module 111, thus the mirror screen 11 may simultaneously reflect the image of the user and also display the GUI thereon.

The analysis apparatus 1 may receive external input through the input interface 15, so the user may interact with the GUI or perform necessary settings on the analysis apparatus 1. In one embodiment, the input interface 15 may be the aforementioned sensors 14, so as to detect the gesture inputs from the user. In another embodiment, the input interface 15 may be the image capturing module 12, so as to capture the external images or the external messages. In a further embodiment, the input interface 15 may be the touch screen or the buttons 13, so as to receive input actions directly from the user. In another further embodiment, the input interface 15 may be a microphone, so as to receive external audio.

The wireless transmission module 16 assists the analysis apparatus 1 to connect to the Internet 4. In particular, the user may connect to the analysis apparatus 1 from a remote end through the Internet 4 to check each information recorded in the analysis apparatus 1 (such as the body information of the user) in any time.

The processor 10 is connected to the display module 111, the image capturing module 12, the input interface 15, and the wireless transmission module 16, and the processor 10 may include computer executable program codes (not shown). Upon executing the computer executable program codes, the processor 10 may control all the above modules of the analysis apparatus 1 and performs the indicating method of the present invention.

Refer to Fig. 5, which is a schematic diagram of a processor according to a first embodiment of the present invention. In particular, the processor 10 accomplishes each function of the indicating method of the present invention through executing the aforementioned computer executable program codes, and the computer executable program codes may be divided into multiple function modules set forth below according to different functions:
1. A face recognizing module 101, which is used to recognize the external image captured by the image capturing module 12, so as to determine whether a face is present in the external image;
2. A positioning module 102, which is used to perform positioning actions on the face presented in the external image through an algorithm, so as to obtain the postions of each facial feature of the face. Also, the positioning module 102 further determines a face type of the face; and
3. An indicating module 103, which is used to perform corresponding process according to the face type of the face determined by the positioning module 102, so as to indicate exact and recommended blush areas upon the face.

In this embodiment, the processor 10 may record multiple face types in advance. After the positioning actions, the positioning module 102 may recognize at least six face types including an oval face, a round face, a square face, a long face, an inverted triangular face, and a diamond face, but not limited thereto.

The processor 10 may additionally record multiple indicating processes respectively corresponding to each of the face types mentioned above. The indicating module 103 may perform a first indicating process on the face to indicate blush areas (including a blush area on the left-side of the face and another blush area on the right-side of the face) if the face is recognized as an oval face, may perform a second indicating process on the face to indicate the blush areas if the face is recognized as a round face or a square face, may perform a third indicating process on the face to indicate the blush areas if the face is recognized as a long face, and may perform a fourth indicating process on the face to indicate the blush areas if the face is recognized as an inverted triangular face or a diamond face. However, the above descriptions are just few embodiments of the present invention, not intended to limit the scope of the present invention.

When the user is facing the analysis apparatus 1, the analysis apparatus 1 may obtain an external image that includes the image of the user through the image capturing module 12. Next, the analysis apparatus 1 fetches a face image of the user from the external image through the face recognizing module 101 of the processor 10, and recognizes the face type of the face image through the positioning module 102 of the processor 10. Next, the analysis apparatus 1 may perform corresponding indicating process according to the face type through the indicating module 103 of the processor 10, so as to indicate the blush areas of the face image.

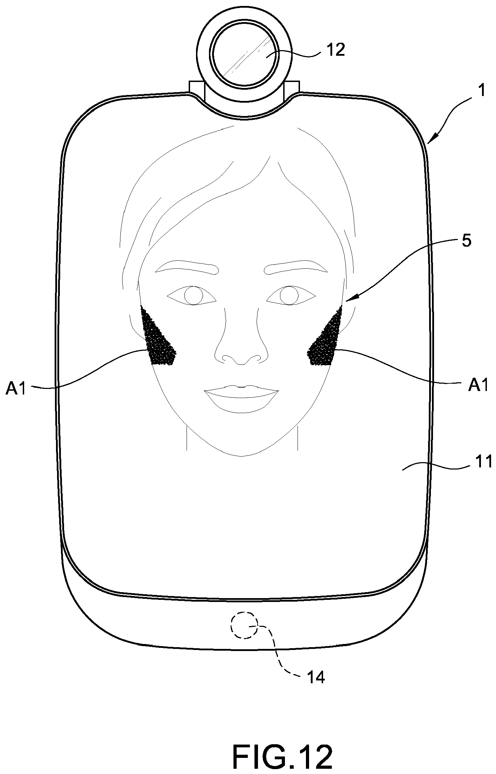

Accordingly, the analysis apparatus 1 may reflect the face look of the user through the mirror screen 11, and simultaneously displays the indicated blush areas on the face look through the display module 111 (as shown in Fig. 12, the displayed face image is overlapped with the displayed blush areas). Therefore, the user may apply cosmetics according to the blush areas displayed on the mirror screen 11 of the analysis apparatus 1, so as to quickly apply the blushes on the exact positions of the face.

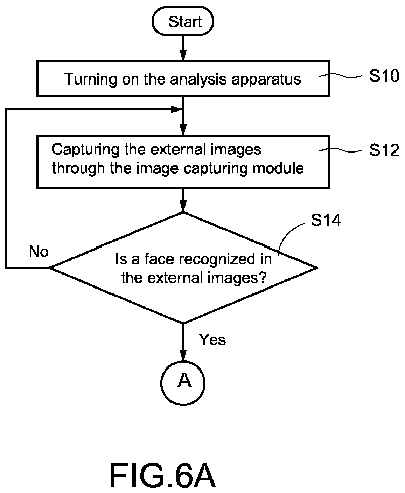

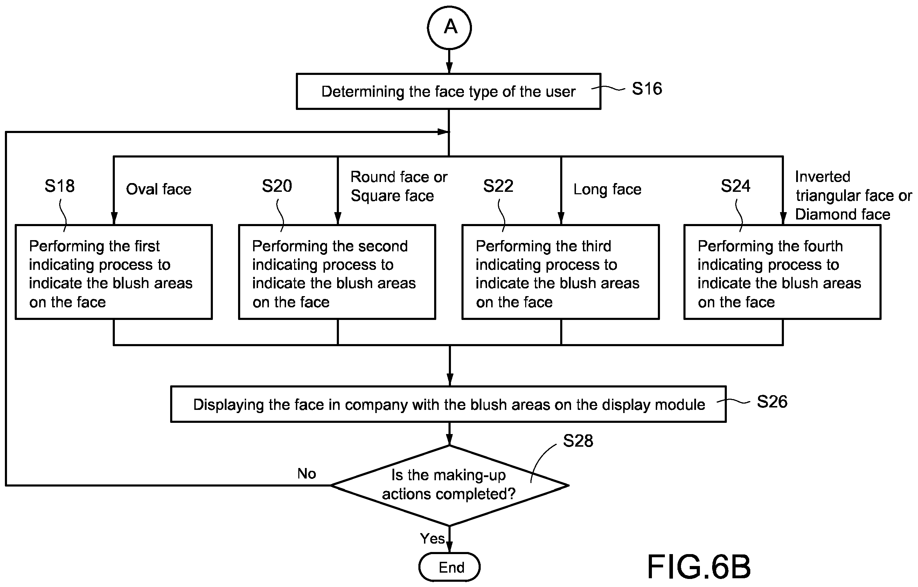

Refer to Fig. 6A and Fig. 6B, wherein Fig. 6A is a first indicating flowchart according to a first embodiment of the present invention, and Fig. 6B is a second indicating flowchart according to the first embodiment of the present invention. Fig. 6A and Fig. 6B are used to describe each step of the indicating method of the present invention, and these steps are in particular adopted by the analysis apparatus 1 as shown in Fig. 1 to Fig. 5. More specific, the analysis apparatus 1 executes aforementioned computer executable program codes (i.e., the above function modules 101-103) through the processor 10 for accomplishing each step as described in the following.

As shown in Fig. 6A, to perform the indicating method through the analysis apparatus 1 of the present invention for assisting the user in applying cosmetics, the user first turns the analysis apparatus 1 on (step S10). In one embodiment, the user may trigger the touch screen or the buttons 13 to turn the analysis apparatus 1 on. In another embodiment, the analysis apparatus 1 may automatically enter a standby mode after receiving power, and the user may input gestures through the image capturing module 12 or the sensors 14 for activating the analysis apparatus 1 from the standby mode, but not limited thereto.

In particular, the analysis apparatus 1 may include multiple modes capable of different functions. In one embodiment, the analysis apparatus 1 is automatically entering an auxiliary mode for assisting the user in applying cosmetics after it is turned on. In another embodiment, the analysis apparatus 1 may automatically enter the standby mode after it is turned on, and enters the auxiliary mode after receiving the corresponding command from the user.

After being turned on, the analysis apparatus 1 keeps capturing external images through the image capturing module 12 (step S12), and the processor 10 of the analysis apparatus 1 keeps determining whether a face is present in the captured external images (step S14). In one embodiment, the processor 10 obtains an external image from the image obtaining mdoule 12, and performs a face recognition on the external image through the face recognizing module 101, so as to determine whether a face is present in the external image or not.

If no face is present in the external image, the analysis apparatus 1 re-executes the step S12 and the step S14 for continually capturing and analyzing external images. If only a bed, a door, or a chair is present in the external image (means there's no human exists in the bedroom), or only the body or the back of the user is present in the external image (means the user doesn't want to use the analysis apparatus 1), the analysis apparatus 1 will not perform the indicating method of the present invention.

As shown in Fig. 6B, if the processor 10 determines that a face is present in the external image, it then performs positioning actions on each part of the face (basically on the facial features of the user) and determines the face type of the face of the user (step S16). In one embodiment, the processor 10 may further determine if the size of the face is larger than a specific ratio or not (for example, the face occupies the external image more than 40%) after the face is determined present in the external image. In the scenario, the process 10 performs the positioning actions on the face and determines the face type only if the size of the face in the external image is larger than the specific ratio.

In one embodiment, the processor 10 renders a face image of the face to the aforementioned positioning module 102 after the face is determined present in the external image, and performs the positioning actions on the face for recognizing the face type of the face through the positioning module 102. In this embodiment, the positioning module 102 may determine the face type according to several parameters of the face, such as the relative positions of each facial feature of the face, and the ratio of each facial feature of the face. Therefore, the positioning module 102 may recognize several face types, at least including an oval face, a round face, a square face, a long face, an inverted triangular face, a diamond face, etc..

It should be noted that the positioning module 102 in the embodiment may perform the positioning actions on each facial feature of the face through a Dlib Face Landmark system, but not limited thereto.

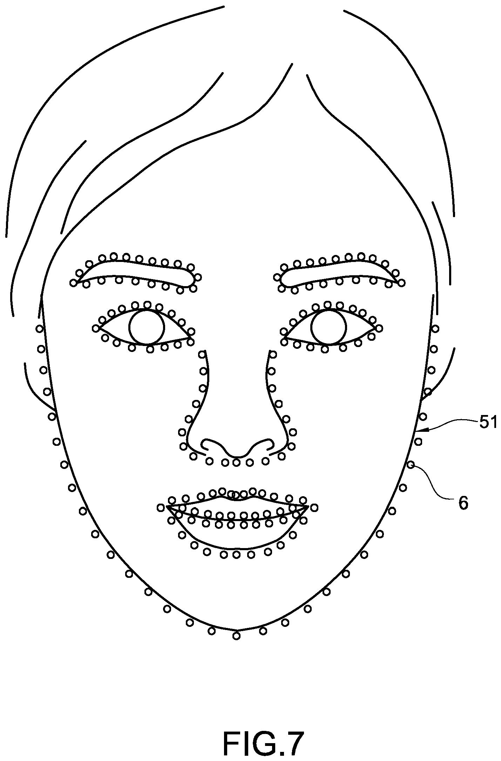

Fig. 7 is a schematic diagram for positioning a face. When determining that a face is present in the external image, the processor 10 further performs analysis on the image of a face 51 through the Dlib Face Landmark system. The Dlib Face Landmark system is a common technical solution in the technical field, which can generate multiple positioning points 6 in the image of the face 51 after completing the analysis (such as 198 positioning points). Therefore, the Dlib Face Landmark system may figure out the positions of each facial feature of the face 51 according to the serial number, the shape, the order, etc. of the multiple positioning points 6 for accomplishing the positioning actions.

Also, the positioning module 102 may further determine the relative positions and the relative ratios among each facial feature of the face 51 according to the positions of the multiple positioning points 6, so as to figure out the face type of the face 51.

Refer back to Fig. 6B. After the step S16, the processor 10 may identify the face type of the aforementioned face and apply a corresponding indicating process according to the face type, so as to indicate the blush areas on the face for assisting the user in applying cosmetics for the blushes. In the embodiment, the processor 10 performs a first indicating process when identifying the face type is an oval face, performs a second indicating process when identifying the face type is a round face or a square face, performs a third indicating process when identifying the face type is a long face, and performs a fourth indicating process when identifying the face type is an inverted triangular face or a diamond face.

In a first embodiment, the processor 10 renders the identified face type to the aforementioned indicating module 103, and the indicating module 103 performs the first indicating process if the face type is identified as the oval face, so as to indicate the blush areas on the face through the first indicating process (step S18). The blush areas in the embodiment include the area of the left-side blush and another area of the right-side blush upon the face.

In a second embodiment, the processor 10 renders the identified face type to the indicating module 103, and the indicating module 103 performs the second indicating process if the face type is identified as the round face or the square face, so as to indicate the blush areas on the face through the second indicating process (step S20).

In a third embodiment, the processor 10 renders the identified face type to the indicating module 103, and the indicating module 103 performs the third indicating process if the face type is identified as the long face, so as to indicate the blush areas on the face through the third indicating process (step S22).

In a fourth embodiment, the processor 10 renders the identified face type to the indicating module 103, and the indicating module 103 performs the fourth indicating process if the face type is identified as the inverted triangular face or the diamond face, so as to indicate the blush areas on the face through the fourth indicating process (step S24).

After the blush areas are indicated, the analysis apparatus 1 may display the face of the user in company with the blush areas through the display module 111, wherein the displayed face is overlapped with the displayed blush areas (step S26). Therefore, the user may check and ensure the positions upon the face for making up the blushes right through the mirror screen 11, and applies cosmetics for the blushes on the exact positions accordingly.

Next, the analysis apparatus 1 determines whether the making-up actions of the user are completed or not (step S28). In one embodiment, the analysis apparatus 1 may determine that the making-up actions are completed if any event set forth below occurs: No face is present in the external image; The size of the face in the external image is smaller than a specific ratio; The user stops making up; The user triggers a stop button of the analysis apparatus 1 or inputs an interrupt gesture.

In the present invention, the analysis apparatus 1 may re-execute the step S18 to the step S26 before the making-up actions of the user are completed, so as to keep capturing the face image of the user, indicating the blush areas on the face image, and displaying the face image in company with the blush areas on the mirror screen 11. Therefore, the analysis apparatus 1 of the present invention may accomplish the technical effect of dynamically analyzing and displaying the blush areas, i.e., the blush areas displayed on the mirror screen 11 may follow the movement of the face of the user captured by the analysis apparatus 1, so the convenience for usage of the analysis apparatus 1 may be further improved.

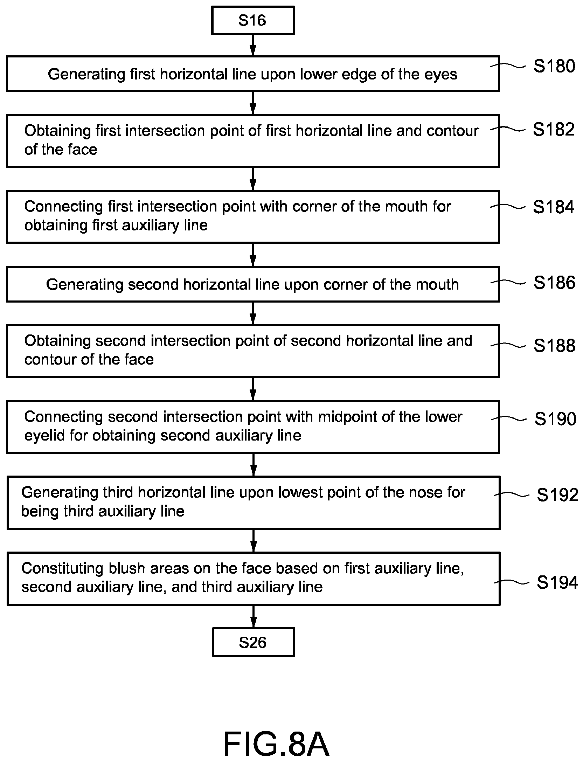

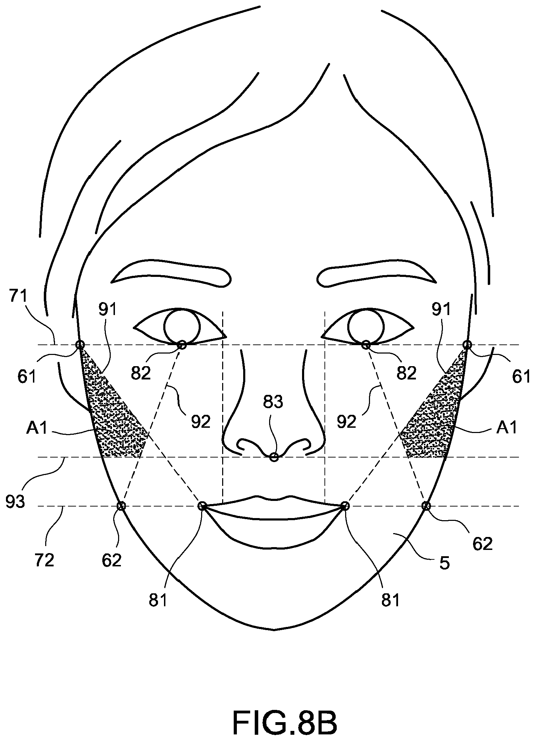

Fig. 8A is a flowchart for indicating the blush areas according to a second embodiment of the present invention. Fig. 8B is a schematic diagram showing the blush areas according to the second embodiment of the present invention. Fig. 8A is used to describe how the indicating module 103 indicates the blush areas through the first indicating process in the above step S18 once the face type of the user is recognized as an oval face by the positioning module 102 in the above step S16. More specific, the first indicating process is composed of the computer executable program codes recorded by the processor 10, and the indicating module 103 may perform each step shown in Fig. 8A while executing the first indicating process.

The following paragraphs are describing the first indicating process in company with Fig. 8B.

First, the indicating module 103 generates a first horizontal line 71 upon a lower edge of the eyes (step S180), and obtains a first intersection point 61 of the first horizontal line 71 and a contour of the face (step S182). In particular, the first intersection point 61 may include a left-first intersection point of the first horizontal line 71 and a left contour of the face and a right-first intersection point of the first horizontal line 71 and a right contour of the face.

Next, the indicating module 103 connects the first intersection point 61 with a corner of the mouth 81 of the face for obtaining a first auxiliary line 91 (step S184). In particular, the first auxiliary line 91 may include a left auxiliary line linked from the left-first intersection point to a left corner of the mouth and a right auxiliary line linked from the right-first intersection point to a right corner of the mouth.

Next, the indicating module 103 generates a second horizontal line 72 upon said corner of the mouth 81 (step S186), wherein the second horizontal line 72 is parallel with both the left corner and the right corner of the mouth of the face. Also, the indicating module 103 obtains a second intersection point 62 of the second horizontal line 72 and the contour of the face (step S188). In particular, the second intersection point 62 may include a left-second intersection point of the second horizontal line 72 and the left contour of the face and a right-second intersection point of the second horizontal line 72 and the right contour of the face.

Next, the indicating module 103 connects the second intersection point 62 with a midpoint of a lower eyelid 82 for obtaining a second auxiliary line 92 (step S190). In particular, the second auxiliary line 92 may include a left auxiliary line linked from the left-second intersection point to a midpoint of a left eyelid and a right auxiliary line linked from the right-second intersection point to a midpoint of a right eyelid.

Further, the indicating module 103 generates a third horizontal line upon a lowest point of the nose 83 of the face for being a third auxiliary line 93 (step S 192). In particular, the third auxiliary line 93 may include a left auxiliary line extended from the nose to the left and a right auxiliary line extended from the nose to the right. Therefore, the indicating module 103 may constitute blush areas A1 on the face based on the first auxiliary line 91, the second auxiliary line 92, and the third auxiliary line 93 (step S194).

More specific, the blush areas A1 may include a left-side blush area A1 constituted by the first to the third auxiliary lines 91-93 on the left side, and a right-side blush area A1 constituted by the first to the third auxiliary lines 91-93 on the right side. In particular, the blush areas A1 are the areas surrounded by the first auxiliary line 91, the second auxiliary line 92, the third auxiliary line 93, and the contour of the face.

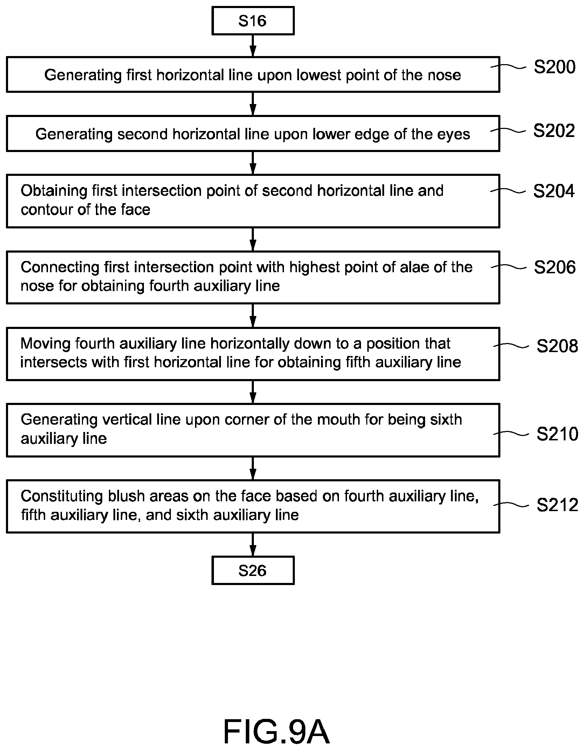

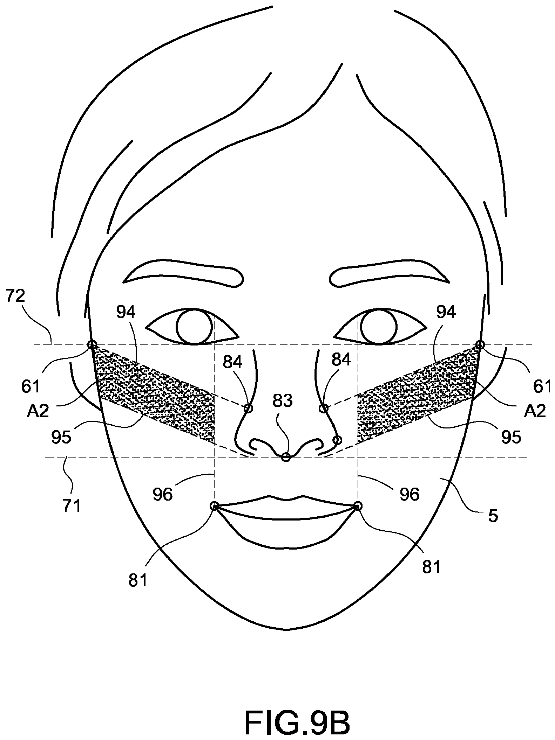

Fig. 9A is a flowchart for indicating the blush areas according to a third embodiment of the present invention. Fig. 9B is a schematic diagram showing the blush areas according to the third embodiment of the present invention. Fig. 9A is used to describe how the indicating module 103 indicates the blush areas through the second indicating process in the above step S20 once the face type of the user is recognized as a round face or a square face by the positioning module 102 in the above step S16. More specific, the second indicating process is composed of the computer executable program codes recorded by the processor 10, and the indicating module 103 may perform each step shown in Fig. 9A while executing the second indicating process.

The following paragraphs are describing the second indicating process in company with Fig. 9B.

First, the indicating module 103 generates a first horizontal line 71 upon a lowest point of the nose 83 of the face (step S200). Next, the indicating module 103 generates a second horizontal line 72 upon a lower edge of the eyes (step S202), and obtains a first intersection point 61 of the second horizontal line 72 and a contour of the face (step S204). In particular, the first intersection point 61 may include a left-first intersection point of the second horizontal line 72 and a left contour of the face and a right-first intersection point of the second horizontal line 72 and a right contour of the face.

Next, the indicating module 103 connects the first intersection point 61 with a highest point of alae of the nose 84 of the face for obtaining a fourth auxiliary line 94 (step S206). In particular, the fourth auxiliary line 94 may include a left auxiliary line linked from the left-first intersection point to a left ala of the nose and a right auxiliary line linked from the right-first intersection point to a right ala of the nose.

Next, the indicating module 103 horizontally moves the fourth auxiliary line 94 down to a position that may intersect with the first horizontal line 71, so as to obtain a fifth auxiliary line 95 (step S208). In particular, the fifth auxiliary line 95 may include a left auxiliary line generated from horizontally moving down the fourth auxiliary line 94 on the left side and a right auxiliary line generated from horizontally moving down the fourth auxiliary line 94 on the right side.

Further, the indicating module 103 generates a vertical line upon a corner of the mouth 81 of the face for being a sixth auxiliary line 96 (step S210). In particular, the sixth auxiliary line 96 may include a left auxiliary line generated vertically from a left corner of the mouth and a right auxiliary line generated vertically from a right corner of the mouth. Therefore, the indicating module 103 may constitute blush areas A2 on the face based on the fourth auxiliary line 94, the fifth auxiliary line 95, and the sixth auxiliary line 96 (step S212).

More specific, the blush areas A2 may include a left-side blush area A2 constituted by the fourth to the sixth auxiliary lines 94-96 on the left side, and a right-side blush area A2 constituted by the fourth to the sixth auxiliary lines 94-96 on the right side. In particular, the blush areas A2 are the areas surrounded by the fourth auxiliary line 94, the fifth auxiliary line 95, the sixth auxiliary line 96, and the contour of the face.

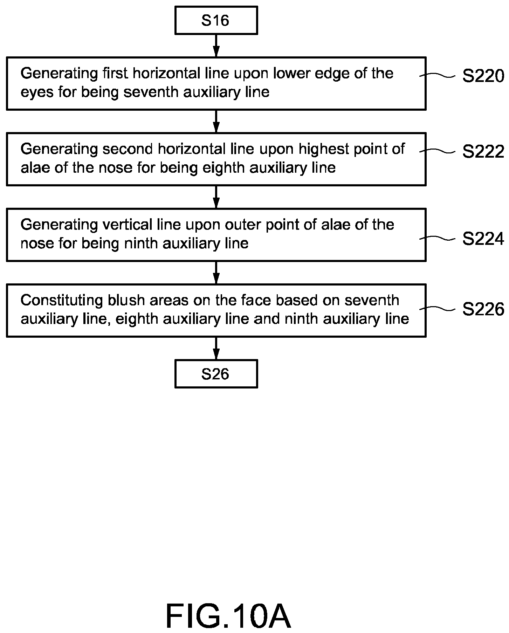

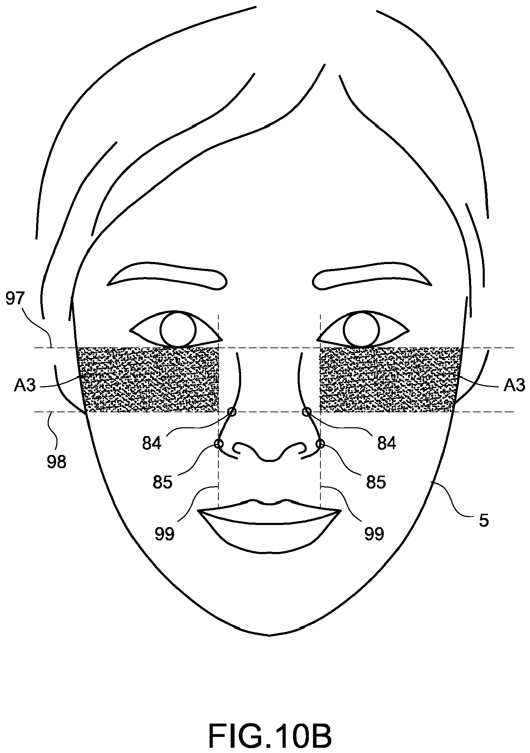

Fig. 10A is a flowchart for indicating the blush areas according to a fourth embodiment of the present invention. Fig. 10B is a schematic diagram showing blush areas according to the fourth embodiment of the present invention. Fig. 10A is used to describe how the indicating module 103 indicates the blush areas through the third indicating process in the above step S22 once the face type of the user is recognized as a long face by the positioning module 102 in the above step S16. More specific, the third indicating process is composed of the computer executable program codes recorded by the processor 10, and the indicating module 103 may perform each step shown in Fig. 10A while executing the third indicating process.

The following paragraphs are describing the third indicating process in company with Fig. 10B.

First, the indicating module 103 generates a first horizontal line 71 upon a lower edge of the eyes for being a seventh auxiliary line 97 (step S220). In particular, the seventh auxiliary line 97 may include a left auxiliary line extended from the left eye to the left and a right auxiliary line extended from the right eye to the right. Next, the indicating module 103 generates a second horizontal line 72 upon a highest point of alae of the nose 84 for being a eighth auxiliary line 98 (step S222). In particular, the eighth auxiliary line 98 may include a left auxiliary line extended from a left ala of the nose to the left and a right auxiliary line extended from a right ala of the nose to the right.

Next, the indicating module 103 generates a vertical line upon an outer point of alae of the nose 85 of the face for being a ninth auxiliary line 99 (step S224). In particular, the ninth auxiliary line 99 may include a left auxiliary line generated vertically from a left outer-ala of the nose and a right auxiliary line generated vertically from a right outer-ala of the nose. Therefore, the indicating module 103 may constitute blush areas A3 on the face based on the seventh auxiliary line 97, the eighth auxiliary line 98 and the ninth auxiliary line 99 (step S226).

More specific, the blush areas A3 may include a left-side blush area A3 constituted by the seventh to the ninth auxiliary lines 97-99 on the left side, and a right-side blush area A3 constituted by the seventh to the ninth auxiliary lines 97-99 on the right side. In particular, the blush areas A3 are the areas surrounded by the seventh auxiliary line 97, the eighth auxiliary line 98, the ninth auxiliary line 99, and the contour of the face.

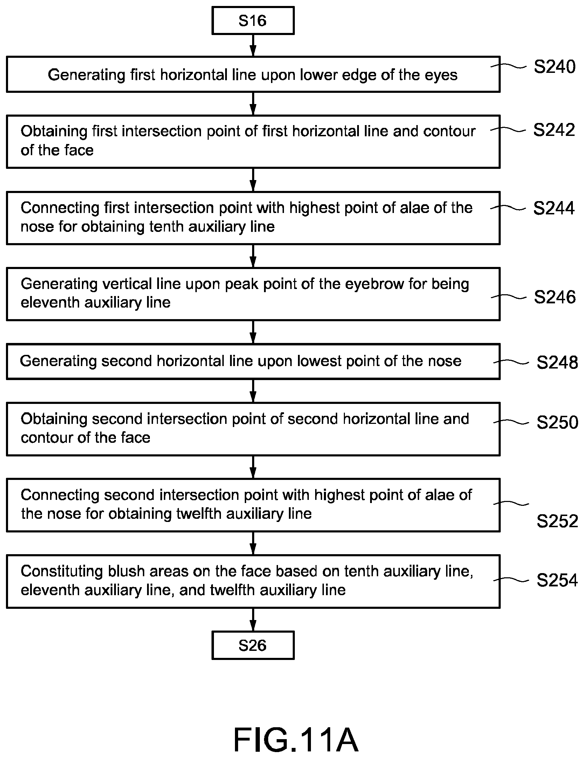

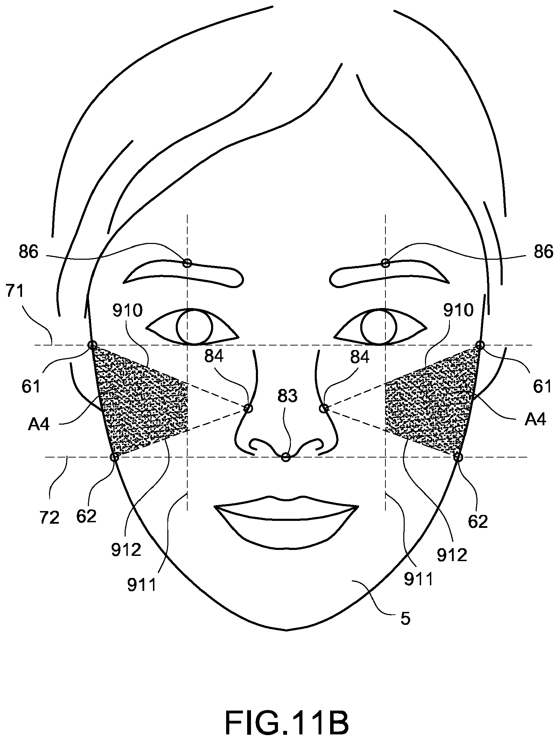

Fig. 11A is a flowchart for indicating the blush areas according to a fifth embodiment of the present invention. Fig. 11B is a schematic diagram showing the blush areas according to the fifth embodiment of the present invention. Fig. 11A is used to describe how the indicating module 103 indicates the blush areas through the fourth indicating process in the above step S24 once the face type of the user is recognized as an inverted triangular face or a diamond face by the positioning module 102 in the above step S16. More specific, the fourth indicating process is composed of the computer executable program codes recorded by the processor 10, and the indicating module 103 may perform each step shown in Fig. 11A while executing the fourth indicating process.

The following paragraphs are describing the fourth indicating process in company with Fig. 11B.

First, the indicating module 103 generates a first horizontal line 71 upon a lower edge of the eyes of the face (step S240), and obtains a first intersection point 61 of the first horizontal line 71 and a contour of the face (step S242). In particular, the first intersection point 61 may include a left-first intersection point of the first horizontal line 71 and a left contour of the face and a right-first intersection point of the first horizontal line 71 and a right contour of the face.

Next, the indicating module 103 connects the first intersection point 61 with a highest point of alae of the nose 84 of the face for obtaining a tenth auxiliary line 910 (step S244). In particular, the tenth auxiliary line 910 may include a left auxiliary line linked from the left-first intersection point to a left ala of the nose and a right auxiliary line linked from the right-first intersection point to a right ala of the nose.

Next, the indicating module 103 generates a vertical line upon a peak point of the eyebrow 86 of the face for being an eleventh auxiliary line 911 (step S246). In particular, the eleventh auxiliary line 911 may include a left auxiliary line generated vertically from a peak point of a left eyebrow and a right auxiliary line generated vertically from a peak point of a right eyebrow.

Next, the indicating module 103 generates a second horizontal line 72 upon a lowest point of the nose 83 of the face (step S248), and obtains a second intersection point 62 of the second horizontal line 72 and the contour of the face (step S250). In particular, the second intersection point 62 may include a left-second intersection point of the second horizontal line 72 and the left contour of the face and a right-second intersection point of the second horizontal line 72 and the right contour of the face.

Next, the indicating module 103 connects the second intersection point 62 with the highest point of alae of the nose 84 for obtaining a twelfth auxiliary line 912 (step S252). In particular, the twelfth auxiliary line 912 may include a left auxiliary line linked from the left-second intersection point to the left ala of the nose and a right auxiliary line linked from the right-second intersection point to the right ala of the nose. Therefore, the indicating module 103 may constitute blush areas A4 on the face based on the tenth auxiliary line 910, the eleventh auxiliary line 911, and the twelfth auxiliary line 912 (step S254).

More specific, the blush areas A4 may include a left-side blush area A4 constituted by the tenth to the twelfth auxiliary lines 910-912 on the left side, and a right-side blush area A4 constituted by the tenth to the twelfth auxiliary lines 910-912 on the right side. In particular, the blush areas A4 are the areas surrounded by the tenth auxiliary line 910, the eleventh auxiliary line 911, the twelfth auxiliary line 912, and the contour of the face.

Once any one of the above blush areas A1-A4 are indicated completely, the analysis apparatus 1 may proceed to execute the aforementioned step S26 for displaying the face of the user in company with the indicated blush areas A1, A2, A3, or A4 on the mirror screen 11.

Fig. 12 is a schematic diagram of the analysis apparatus according to a fourth embodiment of the present invention. As mentioned above, the analysis apparatus 1 of the present invention may capture the face image of the user 5 in real-time for recognizing the blush areas thereon based on the face type of the user 5. Also, the analysis apparatus 1 may display the face image of the user 5 and simultaneously displays the blush areas right on the face image (i.e., the blush areas A1-A4 as shown above, and Fig. 12 takes the blush areas A1 of the oval face for an example).

As shown in Fig. 12, the user 5 may see the reflected image of his/her own face on the mirror screen 11, and the blush areas A1 are indicated and displayed on the reflected image, and the displayed blush areas A1 are overlapped with the reflected image. Therefore, the user 5 may apply cosmetics based on the blush areas A1 displayed on the mirror screen 11, so as to apply cosmetics for the blushes on the exact positions.

By using the analysis apparatus 1 and the indicating method of the present invention, the user 5 may see the image of his or her own face right on the mirror screen 11 and additionally be informed about the positions suitable for applying the blushes, so as to quickly apply cosmetics for the blushes on the exact positions.

## Claims

1. A body information analysis apparatus capable of indicating blush areas, comprising:
an image capturing module (12), for capturing an external image;
a processor (10) electrically connected with the image capturing module (12), recorded multiple face types and multiple indicating processes respectively corresponding to each of the face types, the processor (10) recognizing the external image, and performing positioning actions to each facial feature of a face and determining a face type of the face once the face is recognized from the external image,
wherein the processor (10) executes a corresponding one of the indicating processes according to the determined face type of the recognized face for indicating blush areas (A1-A4) on the face once the face is determined as one of the multiple recorded face types; and
a display module (111), electrically connected with the processor (10), displaying the face in company with the indicated blush areas (A1-A4), wherein the displayed blush areas (A1-A4) are overlapped with the displayed face.

2. The body information analysis apparatus in claim 1, wherein the processor (10) comprises:
a face recognizing module (101), recognizing the external image for determining whether the face is present in the external image;
a positioning module (102), performing positioning actions to each facial feature of the face for determining the face type of the face; and
an indicating module (103), executing the corresponding one of the indicating processes according to the determined face type for indicating the blush areas (A1-A4) on the face.

3. The body information analysis apparatus in claim 2, wherein the indicating module (103) performs a first indicating process for indicating the blush areas (A1) on the face once the face is determined as an oval face.

4. The body information analysis apparatus in claim 3, wherein the indicating module (103) performs the first indicating process for executing following actions once the face is determined as the oval face:
generating a first horizontal line (71) upon a lower edge of eyes of the face;
obtaining a first intersection point (61) of the first horizontal line (71) and a contour of the face;
obtaining a first auxiliary line (91) through connecting the first intersection point (61) to a corner of a mouth (81) of the face;
generating a second horizontal line (72) upon the corner of the mouth (81);
obtaining a second intersection point (62) of the second horizontal line (72) and the contour of the face;
obtaining a second auxiliary line (92) through connecting the second intersection point (62) to a midpoint of a lower eyelid (82) of the face;
generating a third horizontal line for being a third auxiliary line (93) upon a lowest point of a nose (83) of the face; and
constituting the blush areas (A1) based on the first auxiliary line (91), the second auxiliary line (92), and the third auxiliary line (93).

5. The body information analysis apparatus in claim 2, wherein the indicating module (103) performs a second indicating process for indicating the blush areas (A2) on the face once the face is determined as a round face or a square face.

6. The body information analysis apparatus in claim 5, wherein the indicating module (103) performs the second indicating process for executing following actions once the face is determined as the round face or the square face:
generating a first horizontal line (71) upon a lowest point of a nose (83) of the face;
generating a second horizontal line (72) upon a lower edge of eyes of the face;
obtaining a first intersection point (61) of the second horizontal line (72) and a contour of the face;
obtaining a fourth auxiliary line (94) through connecting the first intersection point (61) to a highest point of alae of the nose (84) of the face;
obtaining a fifth auxiliary line (95) through horizontally moving the fourth auxiliary line (94) down to a position that intersects with the first horizontal line (71);
generating a vertical line upon a corner of a mouth (81) of the face for being a sixth auxiliary line (96); and
constituting the blush areas (A2) based on the fourth auxiliary line (94), the fifth auxiliary line (95), and the sixth auxiliary line (96).

7. The body information analysis apparatus in claim 2, wherein the indicating module (103) performs a third indicating process for indicating the blush areas (A3) on the face once the face is determined as a long face.

8. The body information analysis apparatus in claim 7, wherein the indicating module (103) performs the third indicating process for executing following actions once the face is determined as the long face:
generating a first horizontal line upon a lower edge of eyes of the face for being a seventh auxiliary line (97);
generating a second horizontal line upon a highest point of alae of a nose (84) of the face for being an eighth auxiliary line (98);
generating a vertical line upon an outer point of alae of the nose (85) of the face for being a ninth auxiliary line (99); and
constituting the blush areas (A3) based on the seventh auxiliary line (97), the eighth auxiliary line (98), and the ninth auxiliary line (99).

9. The body information analysis apparatus in claim 2, wherein the indicating module (103) performs a fourth indicating process for indicating the blush areas (A4) on the face once the face is determined as an inverted triangular face or a diamond face.

10. The body information analysis apparatus in claim 9, wherein the indicating module (103) performs the fourth indicating process for executing following actions once the face is determined as the inverted triangular face or the diamond face:
generating a first horizontal line (71) upon a lower edge of eyes of the face;
generating a first intersection point (61) of the first horizontal line (71) and a contour of the face;
obtaining a tenth auxiliary line (910) through connecting the first intersection point (61) to a highest point of alae of a nose (84) of the face;
generating a vertical line upon a peak point of eyebrows (86) of the face for being an eleventh auxiliary line (911);
generating a second horizontal line (72) upon a lowest point of the nose (83) of the face;
obtaining a second intersection point (62) of the second horizontal line (72) and the contour of the face;
obtaining a twelfth auxiliary line (912) through connecting the second intersection point (62) to the highest point of alae of the nose (84); and
constituting the blush areas (A4) based on the tenth auxiliary line (910), the eleventh auxiliary line (911), and the twelfth auxiliary line (912).

11. The body information analysis apparatus in claim 2, wherein the positioning module (102) performs the positioning actions to each facial feature of the face through a Dlib Face Landmark system.
